# EUROPEAN PATENT APPLICATION

(11) **EP 4 850 783 A1**
(43) Date of publication of application: **09.12.2026**
(21) Application number: 26176414.6
(22) Date of filing: 05.05.2026
(51) Int. Cl.: B01D 46/42, B01D 45/12, B01D 46/44, B01D 46/62, B01D 50/20

(54) **NBC FILTRATION SYSTEM**

(30) Priority: 28.05.2025 FI 20253215
(71) Applicant: Lumikko Oy, 60100 Seinäjoki (FI)
(72) Inventor: VANHAMÄKI, Marko, 60100 Seinäjoki (FI); LIIKALA, Pasi, 60100 Seinäjoki (FI); LÄHDESMÄKI, Eero, 60100 Seinäjoki (FI)
(74) Representative: Berggren Oy

(57) **Abstract**

The invention relates to a NBC filtration system (1), which system comprises an airflow inlet (2), an airflow outlet (9), a coarse particle filter (4), a fine particle filter (5) and at least one fan (6) for creating an airflow from the airflow inlet through the filters to the airflow outlet, wherein the at least one fan (6) is arranged after the coarse particle filter (4) and the fine particle filter (5) in the direction of the airflow, and the system (1) comprises an airflow divider (7) arranged after the fan and before the airflow outlet in the direction of the airflow, which airflow divider divides part of the filtered air flow to a side air flow into an air conduit (10), which air conduit is connected to and configured to bypass the coarse particle filter for drawing filtered particles from the coarse particle filter by pressure difference and for removing the particles from the filtration system.

## Description

### Technical field

The present invention relates to a air purification and filtration system capable to purify the air NBC (nuclear, biological and chemical) impurities.

### Background

NBC filtration for make-up air in ventilation systems is often required for various different facilities and vehicles especially in the military field. The known NBC filtration systems, however, are quite bulky and complex, which causes problems especially for vehicles wherein space is often restricted. Further, the maintenance of the known NBC systems is often quit difficult especially in field conditions.

### Summary

The present invention provides a structurally simple and small sized NBC filtration system which especially suitable for vehicles.

The NBC filtration system of the invention allows the structure of the whole system to be small-sized and can thus be easily placed and/or added inside a vehicle, for example, without significantly restricting the inside area. The encapsulation also allows the whole filtration system to be physically separated from the inside air of the vehicle, which improves the safety of the filtration system.

The NBC filtration system of the invention comprises an airflow inlet, an airflow outlet, a coarse particle filter, a fine particle filter and at least one fan for creating an airflow from the airflow inlet through the filters to the airflow outlet, wherein the at least one fan is arranged after the coarse particle filter and the fine particle filter in the direction of the airflow, and that the system comprises an airflow divider arranged after the fan and before the airflow outlet in the direction of the airflow, which airflow divider divides part of the filtered air flow to side air flow into an air conduit, which air conduit is connected to and configured to bypass the coarse particle filter for drawing filtered particles from the coarse particle filter by pressure difference and for removing the particles from the filtration system.

The "at least one fan" in the context of the present invention means that a single fan is sufficient to provide the required airflow for the whole system, but that also two or more smaller fans may also be used in stead of, or in addition to, a single larger fan. The fan or fans, however, needs to be located downstream from the coarse particle filter in relation to the direction of the airflow of the filtration system.

In an embodiment of the NBC filtration system of the invention the air conduit of the side airflow is equipped with a venturi-section, which venturi-section is located at the connection between the air conduit of the side airflow and the coarse particle filter or a conduit from the coarse particle filter.

In an embodiment of the NBC filtration system of the invention the connection between the air conduit of the side airflow and the coarse particle filter or the conduit from the coarse particle filter is equipped with a back pressure valve.

In an embodiment of the NBC filtration system of the invention the coarse particle filter is centrifugal filter or vortex filter.

In an embodiment of the NBC filtration system of the invention the system comprises a preheater for heating the airflow arranged before the coarse particle filter in the direction of the airflow.

In an embodiment of the NBC filtration system of the invention the system comprises an automatic control system for controlling the operation of the system. In this embodiment the system preferably comprises at least a first sensor arranged at the fan and/or a second sensor arranged at the air conduit of the side airflow, which sensor(s) measure pressure, moisture and/or temperature, and wherein the measurement information is conveyed to the automatic control system.

In an embodiment of the NBC filtration system of the invention the system is arranged in a vehicle to filter outside air conveyed to the interior of the vehicle.

More precisely the features defining a NBC filtration system in accordance with the present invention are presented in claim 1. Dependent claims present advantageous features and embodiments of the invention.

### Brief description of the drawings

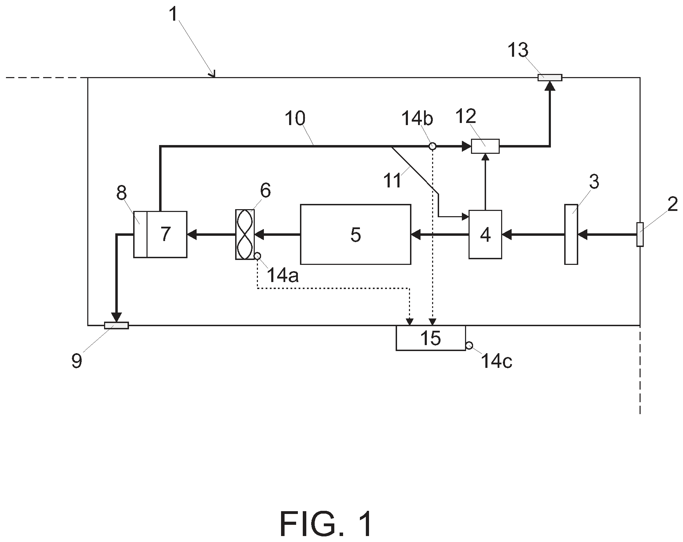

Exemplifying embodiment of the invention and its advantages are explained in greater detail below in the sense of example and with reference to accompanying drawing, which
Figure 1 shows schematically an embodiment of a NBC filtration system in accordance with the present invention.

### Detailed description of an embodiment

Figure 1 shows schematically an embodiment of a NBC filtration system 1 of the present invention. In this embodiment the filtration system 1 is installed in a vehicle to filtrate outside air conveyed to interior of the vehicle.

The filtration system 1 in this embodiment comprises an inlet 2, a preheater 3, a coarse particle filter 4, a fine particle filter 5, a fan 6, an airflow divider 7 with an airflow control valve 8, a first outlet 9, a side airflow conduit 10, a blow channel 11, a venturi 12, a second outlet 13, sensors 14a, 14b and 14 c, and a control system 15.

When the filtration system 1 is operated, the fan 6 sucks outside air from the inlet 2 through the preheater 3, coarse particle filter 4, fine particle filter 5 and blows the filtrated, i.e. clean, air through the airflow divider 7, the airflow control valve 8 and the first outlet 9 to the inside area of the vehicle. In this embodiment the function of preheater 3 is to optimize the operation of the filters 4 and 5 especially in cold and humid environments, and is thus optional in the filtration system 1.

The coarse particle filter 4 filters coarse particles from the air. In this embodiment the filter 4 comprises a plurality, such as 12 for example, vortex and/or cyclone tubes, which tubes separate coarse particles, such as dust and dirt from the air via centrifugal force and airspeed. The separated particles and dust falls on the bottom of the filter casing. The coarse particle filter 4 may be a commercially available cyclone or vortex filter unit, or a customized assembly optimized for vehicular applications.

The fine particle filter 5 filters possible toxic and/or contaminated air from the airflow. The fine particle filter 5 may consist of HEPA (High Efficiency Particulate Air) or ULPA (Ultra-Low Penetration Air) type filters, optionally combined with activated carbon layers to absorb chemical agents.

The fan 6 is in this embodiment a high pressure fan with stepless rotational speed control.

The airflow divider 7 is in this embodiment a flap valve, which divides a small portion of the airflow to the side airflow conduit 10 and lets most of the airflow to continue through the airflow control valve 8 and the first outlet 9 to the interior of the vehicle.

Portion of the side airflow in the side airflow conduit 10 is guided inside the casing of the coarse particle filter 4 via blow channel 11 to remove particles collected on the bottom of the casing. The airflow from the channel 11 blows the particles from the casing via conduit to the venturi 12 and from there with the rest of the side airflow in the side airflow conduit 10 to the outside of the vehicle via the second outlet 13. The conduit between the casing of the coarse particle filter 4 and the venturi 12 is preferably equipped with a back pressure valve, which prevents airflow back to the casing of the coarse particle filter.

The NBC filtration system 1 is also equipped with the control system 15, which allows control of the filtration system. In this embodiment the control system comprises sensor 14a-14c. The sensor 14a is arranged in the fan 6, and it measures air pressure before the fan, air temperature and air moisture. The sensor 14b is arranged in the side airflow conduit 10, and it measures air pressure inside the conduit. The sensor 14c is arranged inside the interior of the vehicle, and it measures air pressure, temperature and humidity inside the vehicle.

The automatic control system 15 processes the measurement data from the sensors 14a-14c to regulate the rotational speed of the fan 6, optimize the flow rates in the main and side airflows, and adjust heating levels of the preheater 3. The system preferably also automatically increases airflow during high contamination levels or to adjust moisture control to maintain filter efficiency.

The above discussed embodiment allows a compact structure for the NBC filtration system, which can be, and preferably is, encased airtightly as a separate space from the interior of the vehicle. This prevents any possible leaks of the system to contaminate the interior of the vehicle.

The specific exemplifying embodiment of the invention shown in the figure and discussed above should not be construed as limiting. A person skilled in the art can amend and modify the embodiment within the scope of the attached claims. Thus, the invention is not limited merely to the embodiment described above.

## Claims

1. NBC filtration system (1), which system comprises an airflow inlet (2), an airflow outlet (9), a coarse particle filter (4), a fine particle filter (5) and at least one fan (6) for creating an airflow from the airflow inlet through the filters to the airflow outlet, **characterized in that** the at least one fan (6) is arranged after the coarse particle filter (4) and the fine particle filter (5) in the direction of the airflow, and that the system (1) comprises an airflow divider (7) arranged after the fan and before the airflow outlet in the direction of the airflow, which airflow divider divides part of the filtered air flow to a side air flow into an air conduit (10), which air conduit is connected to and configured to bypass the coarse particle filter for drawing filtered particles from the coarse particle filter by pressure difference and for removing the particles from the filtration system.

2. NBC filtration (1) system of claim 1, wherein the air conduit (10) of the side airflow is equipped with a venturi-section (12), which venturi-section is located at the connection between the air conduit of the side airflow and the coarse particle filter (4) or a conduit from the coarse particle filter.

3. NBC filtration system (1) of claim 1 or 2, wherein the connection between the air conduit (10) of the side airflow and the coarse particle filter (4) or the conduit from the coarse particle filter is equipped with a back pressure valve.

4. NBC filtration system (1) of any of claims 1-3, wherein the coarse particle filter (4) is centrifugal filter or vortex filter.

5. NBC filtration system (1) of any of claims 1-4, wherein the system (1) comprises a preheater (3) for heating the airflow arranged before the coarse particle filter (4) in the direction of the airflow.

6. NBC filtration system (1) of any of claims 1-5, wherein the system (1) comprises an automatic control system (15) for controlling the operation of the system.

7. NBC filtration system (1) of claim 6, wherein the system (1) comprises a first sensor (14a) arranged at the fan (6) and/or a second sensor (14b) arranged at the air conduit (10) of the side airflow, which sensor(s) measure pressure, moisture and/or temperature, and wherein the measurement information is conveyed to the automatic control system (15).

8. NBC filtration system (1) of any of claims 1-7, wherein the system (1) is arranged in a vehicle to filter outside air conveyed to the interior of the vehicle.
